# EUROPEAN PATENT APPLICATION

(11) **EP 4 393 845 A1**
(43) Date of publication of application: **03.07.2024**
(21) Application number: 22861281.8
(22) Date of filing: 19.08.2022
(51) Int. Cl.: B65G 1/137

(54) **COMMODITY MANAGEMENT DEVICE, COMMODITY MANAGEMENT METHOD, COMMODITY MANAGEMENT SYSTEM, PROGRAM, AND COMPUTER-READABLE STORAGE MEDIUM**

(30) Priority: 25.08.2021 JP 2021137226
(71) Applicant: Kabushiki Kaisha Toshiba, Tokyo 105-0023 (JP); Toshiba Infrastructure Systems & Solutions Corporation, Kawasaki-shi, Kanagawa 212-0013 (JP)
(72) Inventor: KOJIMA, Hidetaka, Kawasaki-shi, Kanagawa 212-0013 (JP); AKAGI, Takuma, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/031429
(87) International publication number: WO 2023/026993

(57) **Abstract**

An article management apparatus capable of improving efficiency of work of article warehousing and picking is provided. An article management apparatus according to an embodiment includes an inputting unit, an information processing unit, and an outputting unit. The inputting unit inputs image data from a photographing device configured to continuously photograph a plurality of article depository sections at which one or more articles to be warehoused or picked are deposited. The information processing unit recognizes, based on the image data, an article depository section which is included in the plurality of article depository sections and at which a number of articles has changed, and generates management information containing at least information regarding the article depository sections based on a result of the recognizing. The outputting unit outputs the management information.

## Description

### FIELD

Embodiments of the present invention relate to an article management apparatus, an article management method, an article management system, a program, and a computer-readable storage medium.

### BACKGROUND

In recent years, with the advancement of automation on logistics sites, various technologies have been proposed. Under the circumstances, desires have been made regarding the quality management and verification of the work of warehousing and picking articles. Generally, a quality management method based on visual inspection is known. As a method not based on visual inspection, a barcode-based method is also known. For example, a barcode reader reads both a barcode of an article and a barcode of its storage location, and the server manages the data of the read barcodes.

### CITATION LIST

### PATENT LITERATURE

Patent Literature 1: Japanese Patent KOKAI Publication No. 2020-015576

### SUMMARY

### TECHNICAL PROBLEM

Visual inspection is advantageous in that it places a light work burden on staff, but is disadvantageous in that, since a work record is not kept, a mistake, if any, may go unnoticed, and it is difficult to verify such a mistake. On the other hand, barcode-based work confirmation is advantageous in that a work record is kept, but is disadvantageous in that an extra work burden is placed on staff.

For example, the work of adhering a barcode to a storage location and the work of reading the barcode with a barcode reader can be burdensome, and improvements have been desired in this regard. If a partition is provided in a single tray and the single tray includes multiple compartment sections, not only will the work of adhering a barcode corresponding to each compartment section be necessitated, but also the work of reading the barcode with a barcode reader every time an article is stored in one of the compartment sections will be required, thus placing a heavier work burden on staff.

An object of the present invention is to provide an article management apparatus, an article management method, an article management system, a program, and a computer-readable storage medium capable of improving the efficiency of the work of article warehousing and picking.

### SOLUTION TO PROBLEM

An article management apparatus according to an embodiment includes an inputting unit, an information processing unit, and an outputting unit. The inputting unit inputs image data from a photographing device configured to continuously photograph a plurality of article depository sections at which one or more articles to be warehoused or picked are deposited. The information processing unit recognizes, based on the image data, an article depository section which is included in the plurality of article depository sections and at which a number of articles has changed, and generates management information containing at least information regarding the article depository sections based on a result of the recognizing. The outputting unit outputs the management information.

### BRIEF DESCRIPTION OF THE DRAWINGS

FIG. 1 is a diagram illustrating an example of a logistics system according to an embodiment.
FIG. 2 is a diagram showing an example of a warehousing and picking processing system according to the embodiment.
FIG. 3 is a diagram showing an example of a processor of the warehousing and picking processing apparatus according to the embodiment.
FIG. 4 is a diagram showing an example of a partitioned tray according to the embodiment.
FIG. 5 is a flowchart showing an example of article warehousing and picking processing based on image data according to the embodiment.
FIG. 6 is a flowchart showing an example of a warehousing management process based on image data according to the embodiment.
FIG. 7 is a diagram showing an example of a GUI screen (support information) displayed in a warehousing management process according to the embodiment.
FIG. 8 is a flowchart showing an example of a picking management process based on image data according to the embodiment.
FIG. 9 is a diagram showing an example of a GUI screen (support information) displayed in a picking management process according to the embodiment.
FIG. 10 is a diagram showing an example of article management using non-partitioned trays.

### DETAILED DESCRIPTION

Hereinafter, an article management system according to an embodiment will be described in detail with reference to the accompanying drawings.

### <Configuration>

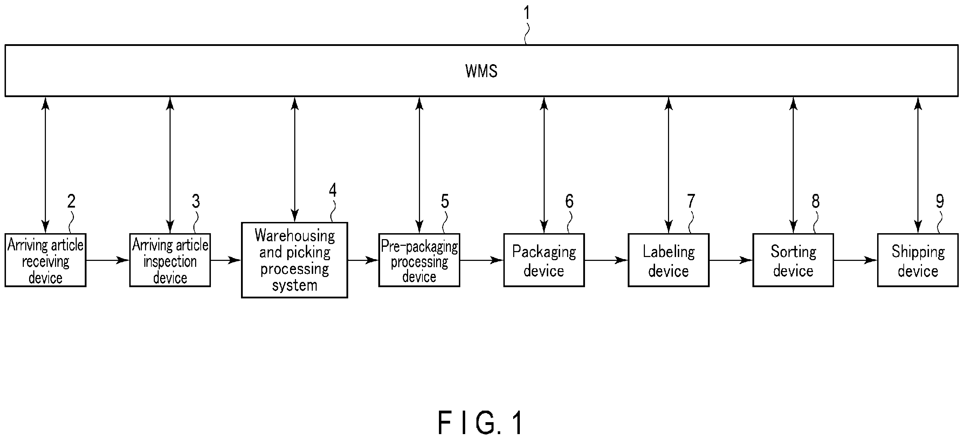

FIG. 1 is a diagram illustrating an example of a logistics system according to an embodiment.

As shown in FIG. 1, the logistics system includes a warehouse management system (WMS) 1, an arriving article receiving device 2, an arriving article inspection device 3, a warehousing and picking processing system (article management apparatus) 4, a pre-packaging processing device 5, a packaging device 6, a labeling device 7, a sorting device 8, and a shipping device 9.

The warehouse management system 1, which is configured of one or more computers, receives, from a host server, article-to-be-warehoused information regarding an article to be warehoused and article-to-be-picked information regarding an article to be picked, transmits the article-to-be-warehoused information to the arriving article receiving device 2, the arriving article inspection device 3, and the warehousing and picking processing system 4, and transmits the article-to-be-picked information to the warehousing and picking processing system 4, the pre-packaging processing device 5, the packaging device 6, the labeling device 7, the sorting device 8, and the shipping device 9.

The arriving article receiving device 2 receives the article-to-be-warehoused information, and executes an arriving article receiving process based on the article-to-be-warehoused information. For example, the arriving article receiving device 2 receives an arriving article, reads a barcode assigned to the article, verifies warehousing of the article based on the article-to-be-warehoused information and the barcode reading result, and sends the article to a later stage if it is determined that the article is scheduled to arrive.

The arriving article inspection device 3 receives the article-to-be-warehoused information, and executes an arriving article inspection process based on the article-to-be-warehoused information. For example, the arriving article inspection device 3 receives the article that has passed through the arriving article receiving device 2, receives a result of visual inspection by a person in charge and a result of image-analysis inspection of the article photographed by a camera, and sends the article to a later stage if it has passed the inspection.

The warehousing and picking processing system 4 receives the article-to-be-warehoused information, executes a warehousing process, and generates and outputs warehousing management information based on the article-to-be-warehoused information and the warehousing process. Also, the warehousing and picking processing system 4 receives the article-to-be-picked information, executes a picking process, and generates and outputs picking management information based on the article-to-be-picked information and the picking process. The warehousing and picking processing system 4 will be described later in detail.

The pre-packaging processing device 5 receives the article-to-be-picked information, and executes a prepackaging process based on the article-to-be-picked information. For example, the pre-packaging processing device 5 receives the article picked by the article warehousing and picking processing system 4, wraps the article with a protective member, etc., and sends the wrapped article to a later stage.

The packaging device 6 receives article-to-be-picked information, and executes a packaging process based on the article-to-be-picked information. For example, the packaging device 6 receives the article wrapped by the pre-packaging processing device 5, packages the article, and sends the packaged article to a later stage.

The labeling device 7 receives the article-to-be-picked information, and executes a labeling process based on the article-to-be-picked information. For example, the labeling device 7 receives the article packaged by the packaging device 6, generates a label on which a destination is recorded based on the article-to-be-picked information, adheres the generated label to the packaged article, and sends the packaged article to which the label is adhered to a later stage.

The sorting device 8 receives the article-to-be-picked information, and executes a sorting process based on the article-to-be-picked information. For example, the sorting device 8 reads the destination recorded on the label adhered to the packaged article by the labeling device 7, and sorts the packaged article based on the read destination.

The shipping device 9 receives the article-to-be-picked information, and executes a shipping process based on the article-to-be-picked information. For example, the shipping device 9 ships the packaged article sorted by the sorting device 8.

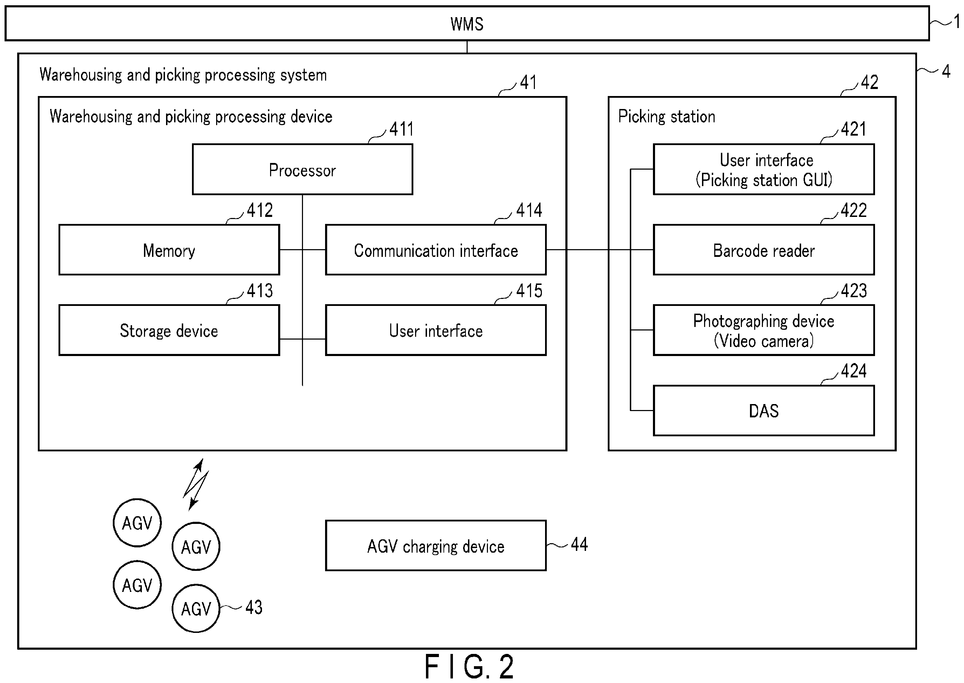

FIG. 2 is a diagram showing an example of a warehousing and picking processing system according to the embodiment.

The warehousing and picking processing system 4 is an example of an article management system. As shown in FIG. 2, the warehousing and picking processing system 4 includes a warehousing and picking processing device 41, a picking station 42, a plurality of automated guided vehicles (AGVs) 43, and an AGV charging device 44.

The warehousing and picking processing device 41 is an example of an article management apparatus. The warehousing and picking processing device 41 includes a processor 411, a memory 412, a storage device 413, a communication interface 414, a user interface 415, etc. The picking station 42 includes a user interface 421, a barcode reader 422, a photographing device 423, and a digital assort system (DAS) 424.

First, the warehousing and picking processing device 41 will be described.

The processor 411 corresponds to the central nerve part of a computer that executes processing regarding warehousing and picking. The processor 411 executes processing regarding warehousing and picking of articles and control regarding transportation of articles based on programs such as system software, application software, or firmware stored in the storage device 413, etc. The processor 411 is, for example, a central processing unit (CPU), a micro processing unit (MPU), or a digital signal processor (DSP). Alternatively, the processor 411 may be a combination of them.

The memory 412 is employed as a so-called work area, which stores data that is temporarily used in execution of various processes by the processor 411.

The storage device 413 is a non-volatile memory device, and stores programs, etc. to be executed by the processor 411. The storage device 413 stores data to be used by the processor 411 in various processes and controls, various setting values, or the like.

The communication interface 414 communicates with an external device in a wired or wireless manner. For example, the communication interface 414 communicates with the AGVs 43, receives position information from each of the AGVs 43, transmits a drive control signal to the AGV 43, and moves the AGV 43 to a target position. The communication interface 414 communicates with each device of the picking station 42, transmits information to each device of the picking station 42, and receives information from each device of the picking station 42.

The user interface 415 includes a touch-panel display, etc., displays various types of information, and receives an input of various types of information.

The AGV 43 is a transport vehicle that loads articles and transports them to a target position, and is driven by a battery installed therein. The AGV 43 receives a drive control signal from the communication interface 414, and moves to the target position based on the drive control signal. Also, the AGV 43 moves to the AGV charging device 44 according to a remaining capacity of the battery, and charges the battery with power from the AGV charging device 44.

Next, a picking station will be described.

The user interface 421 is an example of a display device. The user interface 421 functions as a picking-station graphical user interface (GUI). The user interface 421 includes a touch-panel display, etc., displays various types of information based on display information from the communication interface 414, and makes an output to the warehousing and picking processing device 41 upon receiving an input of various types of information.

The barcode reader 422 reads a barcode on an article, and outputs article code information corresponding to the read barcode. The barcode reader 422 may be either a handheld type held by a person in charge, or a stationary type fixed at a predetermined position.

The photographing device 423 is a video camera that continuously photographs a plurality of article depository sections at which articles to be warehoused or picked are deposited, and is fixed to, for example, a ceiling of a warehouse. The number of the photographing devices 423 may be either one or more than one.

The DAS 424 includes an indicator, etc., and makes a notification that an article has been deposited in a predetermined article depository section, or that an article has been fetched from the predetermined article depository section.

Next, the AGV 43 and the AGV charging device 44 will be described.

The AGV 43 is a transport vehicle that loads articles and transports them to a target position, and is driven by a battery installed therein. The AGV 43 receives a drive control signal from the communication interface 414, and moves to the target position based on the drive control signal. Also, the AGV 43 moves to the AGV charging device 44 according to the remaining capacity of the battery. The AGV charging device 44 supplies power to the AGV 43 that stops at a predetermined position, and charges the battery installed in the AGV 43.

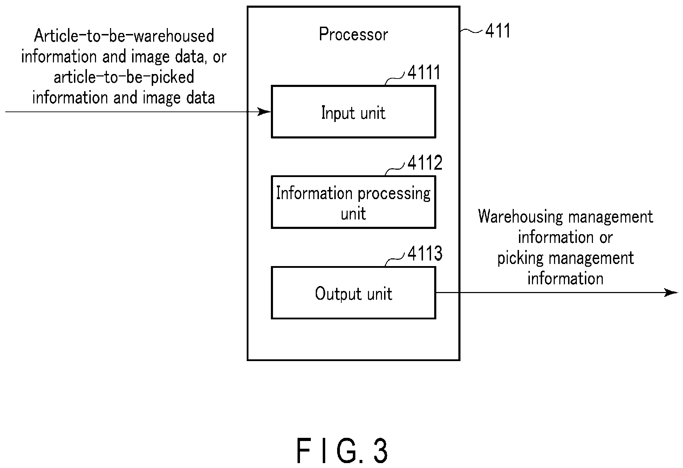

FIG. 3 is a diagram showing an example of a processor of the warehousing and picking processing apparatus according to the embodiment.

As shown in FIG. 3, the processor 411 includes an input unit 4111, an information processing unit 4112, and an output unit 4113. The processor 411 executes programs stored in the storage device 413, thereby implementing the functions of the input unit 4111, the information processing unit 4112, and the output unit 4113. Alternatively, each of the input unit 4111, the information processing unit 4112, and the output unit 4113 may be configured as one or more processors, with the input unit 4111, the information processing unit 4112, and the output unit 4113 implementing functions of the respective components based on the programs stored in the storage device 413.

The input unit 4111 inputs image data from a photographing device 423 configured to continuously photograph a plurality of article depository sections at which articles to be warehoused or picked are deposited. The photographing device 423 is fixed to a ceiling, etc. of the picking station 42, and photographs one or more trays carried to the picking station 42.

The information processing unit 4112 recognizes a plurality of article depository sections based on image data from the photographing device 423, recognizes, of the plurality of article depository sections, a predetermined article depository section at which the number of articles has changed, and generates management information containing at least information regarding the article depository sections based on a result of the recognition. The management information contains the warehousing management information and the picking management information.

The output unit 4113 outputs the generated management information.

Here, a tray that will be employed in article management of the present embodiment will be elaborated. In the present embodiment, there are two cases: Case 1 where articles are managed by partitioned trays, and Case 2 where articles are managed by non-partitioned trays. A partitioned tray includes a plurality of compartment sections partitioned by partition members. In Case 1, a plurality of compartment sections correspond to a plurality of article depository sections. On the other hand, a non-partitioned tray does not include compartment sections. In Case 2, a plurality of trays correspond to a plurality of article depository sections.

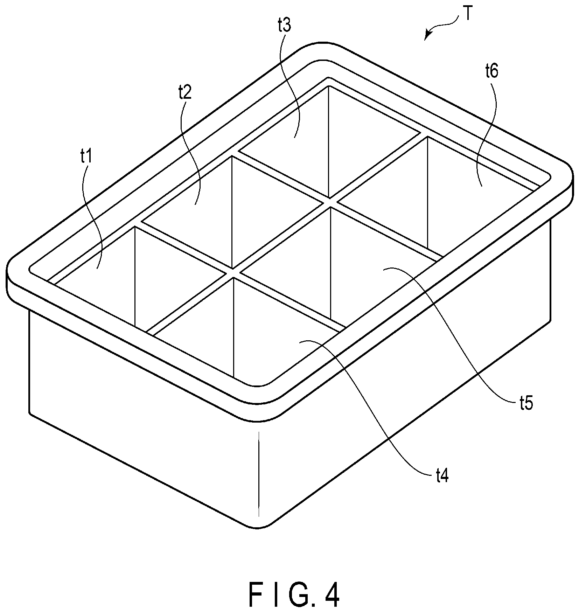

FIG. 4 is a diagram showing an example of a partitioned tray according to the embodiment. As shown in FIG. 4, for example, a single tray T includes, with partitions, six compartment sections t1 to t6. An upper part of the tray T is left open to allow a person in charge to take an article into and out of the tray T from above.

### <Operation>

Next, an operation of warehousing and picking processing will be described.

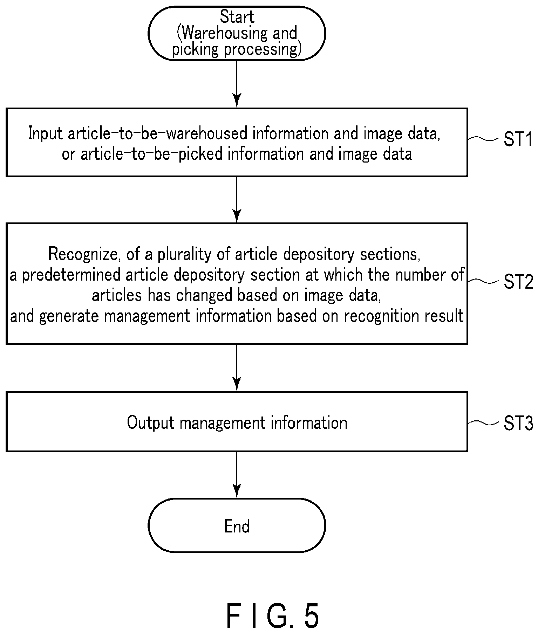

FIG. 5 is a flowchart showing an example of article warehousing and picking processing based on image data according to the embodiment.

The processor 411 causes the input unit 4111, the information processing unit 4112, and the output unit 4113 to execute processing regarding article warehousing and picking based on the programs stored in the storage device 413, etc.

The communication interface 414 receives, from a host device such as the WMS 1, article-to-be-warehoused information regarding an article to be warehoused or article-to-be-picked information regarding an article to be picked, and receives image data from the photographing device 423 of the picking station 42. In Case 1 where articles are managed by partitioned trays T, image data includes an image of one or more partitioned trays and compartment sections t1 to t6 of each tray. In case 2 where articles are managed by non-partitioned trays, image data includes an image of one or more non-partitioned trays. The input unit 4111 of the processor 411 acquires article-to-be-warehoused information or article-to-be-picked information via the communication interface 414, and acquires image data (ST1).

The information processing unit 4112 of the processor 411 analyzes the acquired image data, recognizes a plurality of article depository sections based on a result of the analysis of the image data, recognizes, of the plurality of article depository sections, a predetermined article depository section at which the number of articles has changed, and generates management information containing at least information regarding the article depository sections based on a result of the recognition (ST2). In Case 1 where articles are managed by partitioned trays, the information processing unit 4112 recognizes, of the plurality of compartment sections t1 to t6, a predetermined compartment section at which the number of articles has changed. In Case 2 where articles are managed by non-partitioned trays, the information processing unit 4112 recognizes, of the one or more trays, a predetermined tray at which the number of articles has changed.

The output unit 4113 of the processor 411 outputs management information generated based on a result of the recognition (ST3).

### <Warehousing Processing>

Next, details of warehousing processing will be described.

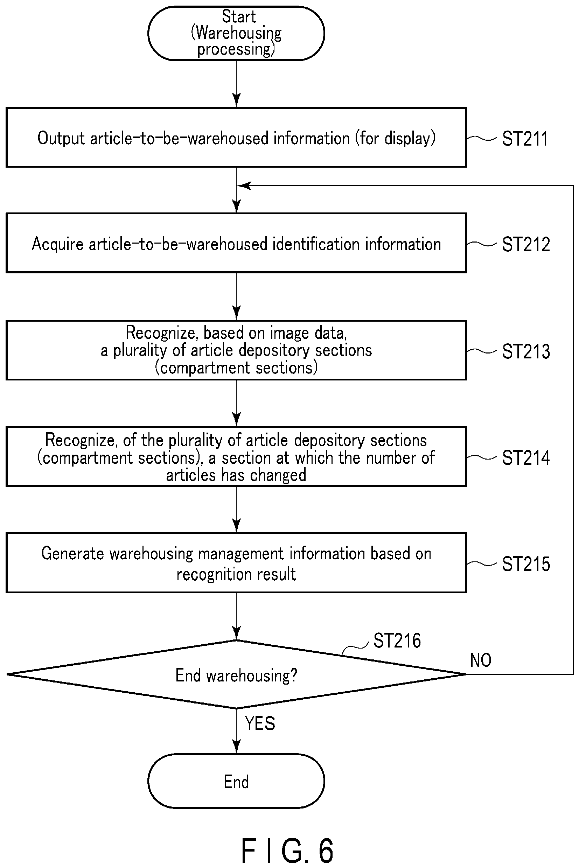

FIG. 6 is a flowchart showing an example of a warehousing management process based on image data according to the embodiment. The flowchart of FIG. 6 is an example of a detailed process at ST2 of the flowchart in FIG. 5. Herein, a description will be given mainly of Case 1 where articles are managed by partitioned trays.

The output unit 4113 of the processor 411 outputs article-to-be-warehoused information received from a host device to the user interface 421 via the communication interface 414 (ST211). The user interface 421 displays a GUI screen based on article-to-be-warehoused information. The GUI screen is support information that supports warehousing of articles. The time required for visual recognition of the GUI screen is, for example, two seconds. The GUI screen includes article-to-be-warehoused identification information, and information regarding the name of articles to be warehoused, the number of the articles to be warehoused, and a designated position for warehousing. The information regarding the designated position for warehousing contains tray identification information and tray compartment section identification information. Also, the information regarding the designated position for warehousing includes an image indicating a plurality of compartment sections included in a single tray that accommodates articles, and an image that specifies a section corresponding to the designated position for warehousing from a plurality of compartment sections.

The person in charge reads a barcode of an article to be warehoused with the barcode reader 422. The barcode reader 422 outputs article identification information corresponding to the read barcode. The time required to read the barcode is, for example, two seconds. The person in charge inputs the number of articles to be warehoused via the GUI screen of the user interface 421. The user interface 421 outputs the input number of articles to be warehoused. The time required to input the number of articles to be warehoused is, for example, two seconds. The input unit 4111 of the processor 411 acquires the article identification information from the barcode reader 422, and acquires, from the user interface 421, the number of articles to be warehoused (ST212).

Alternatively, the information processing unit 4112 of the processor 411 reads, based on image data from the photographing device 423, a barcode of one or more articles included in the image data, and acquires the article identification information and the number of articles to be warehoused (ST212).

Based on the image data from the photographing device 423, the information processing unit 4112 recognizes one or more trays based on the image data, recognizes a plurality of compartment sections included in each tray (ST213), and recognizes, of the plurality of compartment sections, a predetermined article depository section at which the number of articles has changed (ST214). The time required for the recognition is less than one second, which is very short compared to the time for other works, and can be regarded as substantially zero seconds.

Based on first image data, for example, the information processing unit 4112 recognizes six compartment sections included in a single tray, and recognizes that there are no articles in the six compartment sections. By looking at the article-to-be-warehoused identification information, and the information regarding the name of articles to be warehoused, the number of the articles to be warehoused, and the designated position for warehousing (an image for specifying a predetermined compartment section corresponding to the designated position for warehousing) displayed on the GUI screen, the person in charge deposits one or more articles to be warehoused at the designated position for warehousing (a predetermined compartment section). The time required to deposit the articles to be warehoused is, for example, two seconds.

Based on second image data subsequent to the first image data, the information processing unit 4112 recognizes six compartment sections included in a single tray, and recognizes that there is one or more articles in the six compartment sections. Note that time information contained in the second image data is time information that is newer than time information contained in the first image data.

The information processing unit 4112 generates warehousing management information based on a result of the recognition (ST215). That is, the information processing unit 4112 analyzes image data from the photographing device 423, recognizes what article has been warehoused in which compartment section in which tray, and generates warehousing management information. The warehousing management information contains article-to-be-warehoused identification information, and information regarding the name of articles to be warehoused, the number of the articles to be warehoused, and a designated position for warehousing. The warehousing management information may include all the items of image data that have been employed for recognition. For example, the first and second image data is included. Since the warehousing management information includes image data, it is possible to verify a warehousing situation later.

Alternatively, the information processing unit 4112 may verify warehousing based on article-to-be-warehoused information and image data, and generate and store a result of the verification, or the user interface 421 may output a result of the verification. The information processing unit 4112 generates a verification result indicating appropriate warehousing if one or more articles have been warehoused as requested by the article-to-be-warehoused information, and generates a verification result indicating inappropriate warehousing if articles have not been warehoused as requested by the article-to-be-warehoused information. For example, the information processing unit 4112 generates a verification result indicating inappropriate warehousing if one or more articles have been deposited in a section different from a section requested by the article-to-be-warehoused information.

Moreover, the information processing unit 4112 also generates a verification result indicating inappropriate warehousing if one or more articles different from articles requested by the article-to-be-warehoused information have been deposited. Furthermore, the information processing unit 4112 also generates a verification result indicating inappropriate warehousing if a number of articles different from the number of articles requested by the article-to-be-warehoused information have been deposited.

The user interface 421 displays a verification result indicating appropriate warehousing and a verification result indicating inappropriate warehousing in different colors. Alternatively, the user interface 421 outputs a warning sound in response to a verification result indicating inappropriate warehousing. Based on the verification result output from the user interface 421, the person in charge can notice an error in the warehousing work and redo the warehousing work. Also, it is possible to track an error in the warehousing work based on the stored verification result.

The processing from ST212 to ST215 is continued until warehousing of all the articles ends, and the processor 411 ends the warehousing processing after warehousing of all the articles ends (ST216; YES).

The period of time of one cycle of the warehousing processing is on the order of eight seconds, as will be detailed below. Note that, by omitting part of the work, the period of time of one cycle can be further shortened.
- Time required for visual recognition of GUI screen: Two seconds
- Time required for barcode reading: Two seconds (substantially zero seconds in the case of employment of image processing)
- Time required for inputting of the number of articles to be warehoused: Two seconds
- Time required to deposit articles to be warehoused: Two seconds

If a barcode corresponding to a predetermined compartment section of a plurality of compartment sections were read with a barcode reader and the predetermined compartment section were specified, further time and burden would be required for the warehousing work.

In the present embodiment, the processor 411 specifies warehousing of one or more articles in a predetermined compartment section based on image data, thereby reducing the time and burden required for the warehousing work. In addition, through the employment of barcode reading and number-of-articles recognition based on the image data, it is possible to read barcodes of articles to be warehoused with a barcode reader, and to omit inputting of the number of articles. It is also possible to address a case where an article to be warehoused is small and a barcode cannot be adhered to the article. With the above-described configuration of the present embodiment, it is possible to reduce the processing time and to reduce the burden on the worker.

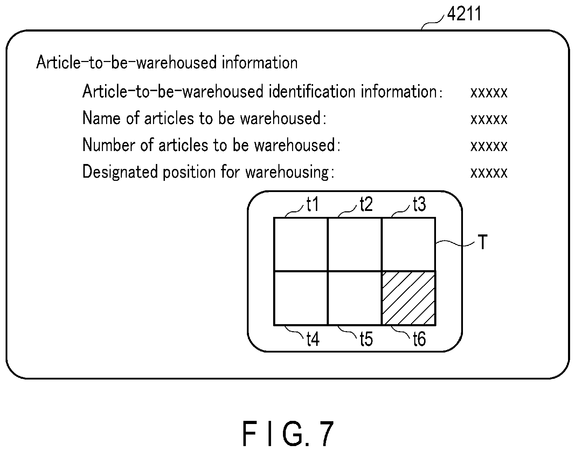

FIG. 7 is a diagram showing an example of a GUI screen (support information) displayed in a warehousing management process according to the embodiment.

As shown in FIG. 7, the GUI screen includes article-to-be-warehoused identification information, and information regarding the name of articles to be warehoused, the number of the articles to be warehoused, and a designated position for warehousing. The information regarding the designated position for warehousing contains tray identification information and tray compartment section identification information. Also, the information regarding the designated position for warehousing includes an image (an image indicating compartment sections t1 to t6) indicating a plurality of compartment sections included in a single tray that accommodates articles, and an image (e.g., an emphasized display of the compartment section t6) that specifies, from a plurality of compartment sections, a section corresponding to the designated position for warehousing. The person in charge deposits one or more articles in the emphasized compartment section while looking at the GUI screen shown in FIG. 7. It is thereby possible to efficiently deposit articles at the correct depository position. Also, the GUI screen may contain information for distinguishing between a section (with articles) in which one or more articles are stored and a section (with no articles) in which no articles are stored.

### <Picking Processing>

Next, details of picking processing will be described.

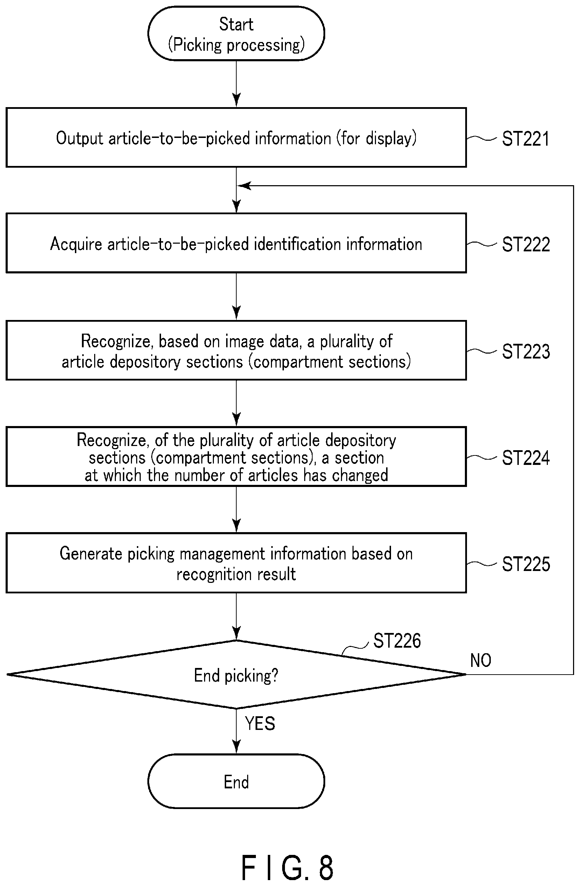

FIG. 8 is a flowchart showing an example of a picking management process based on image data according to the embodiment. The flowchart of FIG. 8 is an example of a detailed process at ST2 of the flowchart in FIG. 5. Herein, a description will be given mainly of Case 1 where articles are managed by partitioned trays.

The output unit 4113 of the processor 411 outputs article-to-be-picked information received from a host device to the user interface 421 via the communication interface 414 (ST221). The user interface 421 displays a GUI screen based on article-to-be-picked information. The GUI screen is support information that supports picking of articles. The time required for visual recognition of the GUI screen is, for example, two seconds. The GUI screen includes article-to-be-picked identification information, and information regarding the name of articles to be picked, the number of the articles to be picked, and a designated position for picking. The information regarding the designated position for picking contains tray identification information and tray compartment section identification information. Also, the information regarding the designated position for picking includes an image indicating a plurality of compartment sections included in a single tray that accommodates articles, and an image that specifies, from a plurality of compartment sections, a section corresponding to the designated position for picking.

The person in charge reads a barcode of an article to be picked with the barcode reader 422. The barcode reader 422 outputs article identification information corresponding to the read barcode. The time required to read the barcode is, for example, two seconds. The person in charge inputs the number of articles to be picked via the GUI screen of the user interface 421. The user interface 421 outputs the input number of articles to be picked. The time required to input the number of articles to be picked is, for example, two seconds. The input unit 4111 of the processor 411 acquires the article identification information from the barcode reader 422, and acquires, from the user interface 421, the number of articles to be picked (ST222). Alternatively, the information processing unit 4112 of the processor 411 reads, based on the image data from the photographing device 423, a barcode of one or more articles included in the image data, the article identification information, and the number of articles to be picked (ST222).

Based on the image data from the photographing device 423, the information processing unit 4112 recognizes one or more trays based on the image data, recognizes a plurality of compartment sections included in each tray (ST223), and recognizes, of the plurality of compartment sections, a predetermined article depository section at which the number of articles has changed (ST224). The time required for the recognition is less than one second, which is very short compared to the time for other works, and can be regarded as substantially zero seconds.

Based on first image data, for example, the information processing unit 4112 recognizes six compartment sections included in a single tray, and recognizes that there is one or more articles in the six compartment sections. By looking at the article-to-be-picked identification information, and the information regarding the name of articles to be picked, the number of the articles to be picked, and the designated position for picking (an image for specifying a predetermined compartment section corresponding to the designated position for picking) displayed on the GUI screen, the person in charge fetches one or more articles to be picked from the designated position for picking (a predetermined compartment section). The time required to fetch articles to be picked is, for example, two seconds.

Based on second image data subsequent to the first image data, the information processing unit 4112 recognizes six compartment sections included in a single tray, and recognizes that there are no articles in the six compartment sections. Note that time information contained in the second image data is time information that is newer than time information contained in the first image data.

Based on a result of the recognition, the information processing unit 4112 generates picking management information (ST225). That is, the information processing unit 4112 analyzes image data from the photographing device 423, recognizes what article has been picked from which compartment section in which tray, and generates picking management information. The picking management information contains article-to-be-picked identification information, and information regarding the name of articles to be picked, the number of the articles to be picked, and a designated position for picking. The picking management information may include all the items of image data that have been employed for recognition. For example, the first and second image data is included. Since the picking management information includes image data, it is possible to verify a warehousing situation later.

Also, the information processing unit 4112 may verify picking based on the article-to-be-picked information and the image data, and generate and store a result of the verification; alternatively, the user interface 421 may output a result of the verification. The information processing unit 4112 generates a verification result indicating appropriate picking if one or more articles have been picked as requested by the article-to-be-picked information, and generates a verification result indicating inappropriate picking if articles have not been picked as requested by the article-to-be-picked information. For example, the information processing unit 4112 generates a verification result indicating inappropriate picking if one or more articles have been fetched from a section different from a section requested by the article-to-be-picked information.

Furthermore, the information processing unit 4112 also generates a verification result indicating inappropriate warehousing if a number of articles different from the number of articles requested by the article-to-be-picked information have been picked.

The user interface 421 displays the verification result indicating appropriate picking and the verification result indicating inappropriate picking in different colors. Alternatively, the user interface 421 outputs a warning sound in response to a verification result indicating inappropriate picking. Based on the verification result output from the user interface 421, the person in charge can notice an error in the picking work and redo the picking work. Also, it is possible to track an error in the picking work based on the stored verification result.

The processing from ST222 to ST225 is continued until picking of all the articles ends, and the processor 411 ends the picking processing after picking of all the articles ends (ST226; YES).

The period of time of one cycle of the picking processing is on the order of eight seconds, as will be detailed below. Note that, by omitting part of the work, the period of time of one cycle can be further shortened.
- Time required for visual recognition of GUI screen: Two seconds
- Time required for barcode reading: Two seconds (substantially zero seconds in the case of employment of image processing)
- Time required to input the number of articles to be picked: Two seconds
- Time required to fetch articles to be picked: Two seconds

If a barcode corresponding to a predetermined compartment section of a plurality of compartment sections were read with a barcode reader and the predetermined compartment section were specified, further time and burden would be required for the picking work.

In the present embodiment, the processor 411 specifies a predetermined compartment section based on image data, thereby reducing the time and burden required for the picking work. In addition, through the employment of barcode reading and number-of-articles recognition based on the image data, it is possible to read a barcode of an article to be picked with a barcode reader, and to omit inputting of the number of articles. It is also possible to address a case where an article to be picked is small and a barcode cannot be adhered to the article. With the above-described configuration of the present embodiment, it is possible to reduce the processing time and to reduce the burden on the worker.

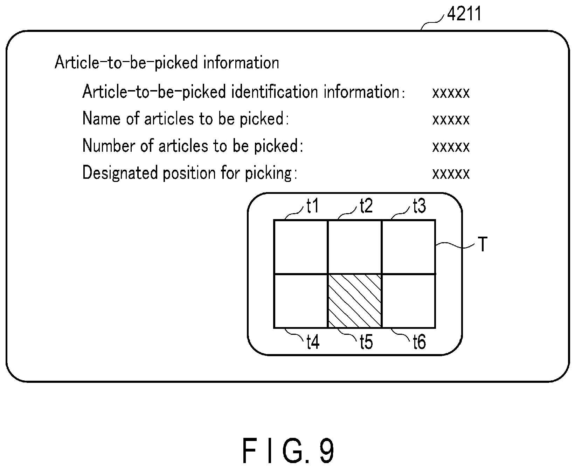

FIG. 9 is a diagram showing an example of a GUI screen (support information) displayed in a picking management process according to the embodiment.

As shown in FIG. 9, the GUI screen includes article-to-be-picked identification information, and information regarding the name of articles to be picked, the number of the articles to be picked, and a designated position for picking. The information regarding the designated position for picking contains tray identification information and tray compartment section identification information. The information regarding the designated position for picking includes an image (an image indicating compartment sections t1 to t6) indicating a plurality of compartment sections included in a single tray that accommodates articles, and an image indicating a designated position for picking (e.g., an emphasized display of the compartment section t5). The person in charge fetches one or more articles from the emphasized compartment section while looking at the GUI screen shown in FIG. 9. It is thereby possible to efficiently fetch one or more articles at the correct position. Also, the GUI screen may contain information for distinguishing between a section (with articles) in which one or more articles are stored and a section (with no articles) in which no articles are stored.

Note that, in the case of simultaneously performing warehousing processing and picking processing, the user interface 421 may display the GUI screen shown in FIG. 7 and the GUI screen shown in FIG. 9 as a single screen. For example, the GUI screen includes images of a plurality of compartment sections included in a single tray, and further includes a first image (e.g., a first emphasized display of the compartment section t6) indicating a designated position for warehousing from a plurality of compartment sections and a second image (e.g., a second emphasized display of the compartment section t5) indicating a designated position for picking from a plurality of compartment sections. In this case, the person in charge can efficiently perform the warehousing work and the picking work while looking at the GUI screen.

Next, a case will be described where an article warehousing or picking recognition process is performed in conjunction with detection of a position and a movement of the operator's body part such as the wrist or the hand with which the articles are moved.

The information processing unit 4112 of the processor 411 recognizes, based on image data from the photographing device 423, a plurality of article depository sections, a change in the number of articles in the article depository sections, and a position and a movement of the operator's body part such as the wrist or the hand with which the articles are moved, and generates, based on a result of the recognition, warehousing management information or picking management information. Based on the image data from the photographing device 423, the information processing unit 4112 generates management information based on, for example, a plurality of article depository sections, a change in the number of articles in each of the article depository sections, a period of time during which the operator's hand with which the articles are moved should exist at a position of the article depository section, and a change in whether or not an article is present in the operator's hand at the position of the article depository section. The management information contains identification information for identifying an article depository section at which the number of articles has changed. The identification information for identifying the article depository section is, for example, tray identification information and tray compartment section identification information.

Based on the image data, the information processing unit 4112 recognizes articles, trays, and a person, recognizes a plurality of article depository sections included in a single tray, and detects a position of a body part such as a wrist or a hand included in the recognized person. The information processing unit 4112 tracks movement of the article together with the movement of the body part, and detects which section the article has been released at, namely, which section the article has been deposited at. Also, the information processing unit 4112 tracks movement of the article together with the movement of the body part, and detects which section the article has been fetched from.

For example, the information processing unit 4112 detects, based on a combination F(x) of the following F (A1, A2, A3, B1, and B2), which section an article has been deposited at, namely, detects an increase in the number of articles in each section, determines that an article has been warehoused based on a result of the detection, and generates management information. Also, the information processing unit 4112 detects which section an article has been fetched from based on a combination F(x) of the following F (A1, A2, A3, B1, and B2), namely, detects a decrease in the number of articles in each section, determines, based on a result of the detection, that an article has been picked, and generates management information.
A: Hand movement
   A1: If the position of the right hand (left hand) stays at a designated position for warehousing or picking for a time period equal to or longer than a time period T (e.g., 1.5 sec) during which the hand should exist at the designated position.
   A2: If the article in the hand or the article held by the hand disappears after the above operation at the designated position for warehousing. Alternatively, if the article in the hand or the article held by the hand exists after the operation at the designated position for picking.
   A3: If the article in the hand or the article held by the hand exists prior to the above operation at the designated position for warehousing. Alternatively, if the article in the hand or the article held by the hand disappears prior to the above operation at the designated position for picking.
B: Difference in peripheral images including a designated position for warehousing or a designated position for picking (comparison of still images before and after a hand operation)
   B1: In the case of warehousing, for example, whether or not the number of articles at the designated position for warehousing has increased (whether or not there is a change in the image). In the case of picking, whether or not the number of articles at the designated position for picking has decreased (whether or not there is a change in the image).
   B2: Whether or not there is a change in the peripheral images at the designated position for warehousing or picking.

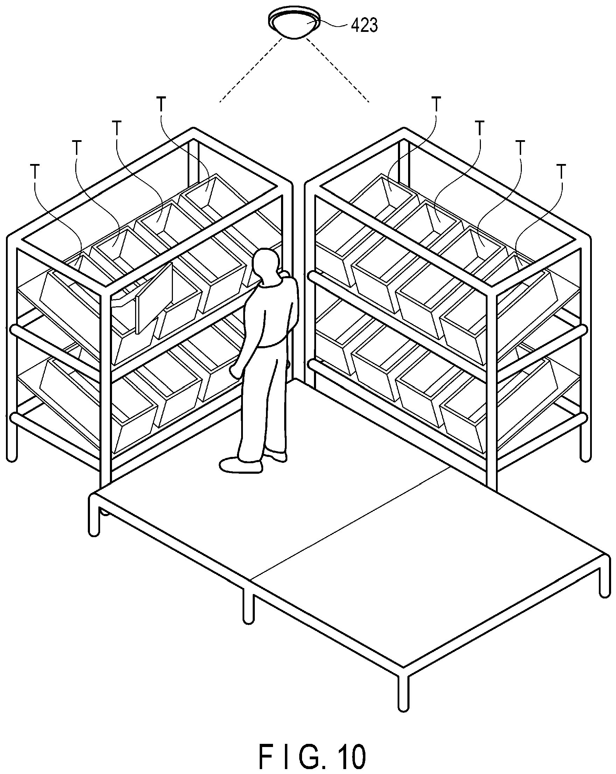

FIG. 10 is a diagram showing an example of article management using non-partitioned trays.

A plurality of non-partitioned trays T are deposited in shelves in a warehouse. The photographing device 423 is installed in such a manner that article depository states of all the trays T deposited in the shelves in the warehouse can be photographed. For example, the photographing device 423 is installed on a ceiling of the warehouse. The photographing device 423 is also installed on an upper part of each tier of the shelves. The image data output from the photographing device 423 includes a plurality of article depository sections corresponding to a plurality of trays T.

The information processing unit 4112 of the processor 411 analyzes the acquired image data, and recognizes a plurality of article depository sections corresponding to a plurality of trays T based on a result of the analysis of the image data. Furthermore, the information processing unit 4112 recognizes, of the plurality of article depository sections, a predetermined article depository section at which the number of articles has changed, and generates management information containing at least information regarding the article depository sections based on a result of the recognition, namely, management information on one or more articles to be warehoused or picked. According to the present embodiment, a plurality of trays T are regarded as a plurality of article depository sections, and warehousing or picking of articles is efficiently managed based on image data.

The programs according to the present embodiment may be transferred in a state of being stored in an electronic device, or may be transferred in a state of not being stored in an electronic device. In the latter case, the programs may be transferred via a network, or may be transferred in a state of being stored in a storage medium. The storage medium is a non-temporary tangible medium. The recording medium is a computer-readable medium. The recording medium may be any form of medium that can store programs and can be read by a computer, such as a CD-ROM, a memory card, etc.

According to the above-described embodiment, it is possible to provide an article management apparatus, an article management method, an article management system, a program, and a computer-readable storage medium capable of efficiently generating management information regarding article warehousing and picking.

While certain embodiments have been described, these embodiments have been presented by way of example only, and are not intended to limit the scope of the inventions. Indeed, the new embodiments described herein may be embodied in a variety of other forms, and various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. An article management apparatus, comprising:
an inputting unit configured to input image data from a photographing device configured to continuously photograph a plurality of article depository sections at which one or more articles to be warehoused or picked are deposited;
an information processing unit configured to recognize, based on the image data, an article depository section which is included in the plurality of article depository sections and at which a number of articles has changed, and generate management information containing at least information regarding the article depository sections based on a result of the recognizing; and
an outputting unit configured to output the management information.

2. The article management apparatus according to claim 1, wherein
the information processing unit recognizes, based on the image data, the plurality of article depository sections, a change in the number of articles at each of the article depository sections, and a position of a hand of an operator with which the articles are moved, and generates the management information based on a result of the recognizing.

3. The article management apparatus according to claim 2, wherein
the information processing unit generates, based on the image data, the management information based on the plurality of article depository sections, a change in the number of articles at each of the article depository sections, a period of time during which the hand of the operator should exist at a position of the article depository section, and a change in whether or not one or more articles are present in the operator's hand at the position of the article depository section.

4. The article management apparatus according to any one of claims 1 to 3, wherein
the management information contains identification information for identifying the article depository sections at which the number of articles has changed.

5. The article management method, comprising:
inputting image data from a photographing device configured to continuously photograph a plurality of article depository sections at which one or more articles to be warehoused or picked are deposited;
recognizing, based on the image data, an article depository section which is included in the plurality of article depository sections and at which a number of articles has changed;
generating picking management information regarding the article depository sections based on a result of the recognizing; and
outputting the management information.

6. A program for causing a computer to execute the steps of:
inputting image data from a photographing device configured to continuously photograph a plurality of article depository sections at which one or more articles to be warehoused or picked are deposited;
recognizing, based on the image data, an article depository section which is included in the plurality of article depository sections and at which a number of articles has changed;
generating management information containing at least information regarding the article depository sections based on a result of the recognizing; and
outputting the management information.

7. An article management system, comprising:
an article management apparatus configured to:
input image data from a photographing device configured to continuously photograph a plurality of article depository sections at which one or more articles to be warehoused or picked are deposited;
recognize, based on the image data, an article depository section which is included in the plurality of article depository sections and at which a number of articles has changed;
generate picking management information regarding the article depository sections based on a result of the recognizing; and
output the management information and
a display device configured to display support information that supports article warehousing or picking based on article-to-be-warehoused information regarding one or more articles to be warehoused or article-to-be-picked information regarding one or more articles to be picked.

8. The article management system according to claim 7, wherein
the display device displays the support information based on the article-to-be-warehoused information, and
the support information contains information regarding a designated position for warehousing of the articles to be warehoused.

9. The article management system according to claim 8, wherein
the information regarding the designated position for warehousing includes an image indicating the plurality of article depository sections included in a single tray that accommodates one or more articles, and an image specifying a section corresponding to the designated position for warehousing from the plurality of article depository sections.

10. The article management system according to claim 9, wherein
the article management apparatus recognizes an article warehousing completion position based on the result of the recognizing, and verifies warehousing from the designated position for warehousing and the warehousing completion position, and
the display device displays a result of the verifying of the warehousing.

11. The article management system according to claim 7, wherein
the display device displays the support information based on the article-to-be-picked information, and
the support information contains information regarding a designated position for picking of the articles to be picked.

12. The article management system according to claim 11, wherein
the information regarding the designated position for picking includes an image indicating a plurality of article depository sections included in a single tray that accommodates one or more articles, and an image specifying, from the plurality of article depository sections, a section corresponding to the designated position for picking.

13. The article management system according to claim 12, wherein
the article management apparatus recognizes an article picking completion position based on the result of the recognizing, and verifies warehousing from the designated position for picking and the picking completion position, and
the display device displays a result of the verifying of the picking.

14. A non-transitory computer-readable storage medium storing thereon a program for causing a computer to execute the steps of:
inputting image data from a photographing device configured to continuously photograph a plurality of article depository sections at which one or more articles to be warehoused or picked are deposited;
recognizing, based on the image data, an article depository section which is included in the plurality of article depository sections and at which a number of articles has changed;
generating management information containing at least information regarding the article depository sections based on a result of the recognizing; and
outputting the management information.
